# FASCICULE DE BREVET EUROPEEN

(11) **EP 3 081 442 B1**
(45) Date de publication et mention de la délivrance du brevet: **14.03.2018**
(21) Numéro de dépôt: 16163161.9
(22) Date de dépôt: 31.03.2016
(51) Int. Cl.: B60S 1/38

(54) **BALAI D ESSUYAGE ET ENSEMBLE D ESSUYAGE COMPRENANT UN TEL BALAI**
SCHEIBENWISCHER UND WISCHEREINHEIT, DIE EINEN SOLCHEN SCHEIBENWISCHER UMFASST
WIPER BLADE AND WIPER ASSEMBLY COMPRISING SUCH A BLADE

(30) Priorité: 17.04.2015 FR 1553472
(43) Date de publication de la demande: 19.10.2016
(73) Titulaire: Valeo Systèmes d'Essuyage, 78322 Le Mesnil Saint Denis (FR)
(72) Inventeur: GARIBALDI, Vincent, 63500 ISSOIRE (FR); GAUCHER, Vincent, 63720 ENNEZAT (FR)
(74) Mandataire: Callu Danseux, Violaine

(56) Documents cités:
- DE-A1-102010 039 788
- DE-A1-102011 078 108
- DE-A1-102011 082 676
- US-A1- 2008 052 864

## Description

La présente invention concerne un balai d'essuyage pour vitre de véhicule automobile, ainsi qu'un ensemble d'essuyage intégrant un tel balai d'essuyage.

Il existe aujourd'hui une technologie de balai d'essuyage pour vitre de véhicule connue sous le nom de balai plat (ou Flat Blade en Anglais) et dont un exemple de réalisation est décrit dans la demande de brevet FR2923785 déposée par la demanderesse. Cette technologie de balai plat consiste généralement en une structure construite autour d'une pièce longitudinale monobloc formant un support en matériau plastique semi-rigide et flexible comprenant, d'une part, une cavité dans laquelle est logé un élément de rigidification du balai, généralement en forme de bande métallique allongée élastique, appelée également vertèbre, et, d'autre part, une griffe portant la lame d'essuyage en élastomère. Dans la demande de brevet précédemment citée, la pièce monobloc est solidaire d'un connecteur central permettant la liaison avec le mécanisme d'entraînement du balai. Ce type de construction est classique d'un ensemble d'essuyage d'un pare-brise.

On connait aussi du document DE 10 2011 082676 A1 un balai d'essuyage selon le préambule de la revendication 1.

Or, en matière d'essuyage des vitres d'une automobile, même si l'accent est souvent mis sur l'essuyage du pare-brise, on peut prévoir l'essuyage de la vitre arrière d'un véhicule automobile. Ce type d'essuyage n'est pas obligatoire mais il est particulièrement intéressant en ce qu'il permet d'assurer au conducteur une vision dégagée du trafic à l'arrière du véhicule ou en cas de marche arrière.

Que l'on utilise un balai pour un pare-brise ou pour une vitre arrière, l'usure des lames d'essuyage impose de réaliser plusieurs fois leur remplacement pendant la durée de vie du véhicule, et les concepteurs visent à proposer des ensembles d'essuyage optimisés pour faciliter le montage et le démontage par l'utilisateur du véhicule.

Dans ce contexte, l'invention propose un balai d'essuyage d'une vitre de véhicule automobile, comprenant une portion d'essuyage et une portion de raccordement à un mécanisme d'entraînement du balai, ladite portion d'essuyage comprenant un moyen de support sur lequel est rapportée une lame d'essuyage de la vitre et à l'intérieur duquel est logé un élément de rigidification du balai. Selon de l'invention, la portion de raccordement est disposée dans le prolongement d'une extrémité axiale proximale de la portion d'essuyage.

Ainsi, un balai selon l'invention permet d'utiliser une structure de type balai plat, intéressante en terme de conception et de rigidité, avec un entraînement en bout du moyen de support pour être appliqué notamment à des ensembles d'essuyage de vitre arrière.

Selon l'invention, l'élément de rigidification du balai est une tige préformée de manière à présenter une première partie sensiblement plane, apte à être logée dans le moyen de support dans la portion d'essuyage du balai, et une deuxième partie qui prolonge l'extrémité axiale de la première partie et qui forme ladite portion de raccordement du balai audit mécanisme d'entraînement. Selon l'invention, le prolongement axial permettant de former la portion de raccordement est réalisé par l'élément de rigidification du balai lui-même. La deuxième partie de l'élément de rigidification du balai comporte un bras formant ressort et une paroi de fixation qui s'étend sensiblement parallèlement à la portion d'essuyage du balai. Le rôle de ce bras formant ressort est de plaquer le balai de haut en bas lorsque le balai est fixé sur le mécanisme d'entraînement associé. Le bras formant ressort comprend l'élément de rigidification du balai replié sur lui-même de sorte que la deuxième partie de l'élément de rigidification du balai présente une forme en " S ". Selon différentes caractéristiques de l'invention, prises seules ou en combinaison de la mise en oeuvre d'un mode de réalisation du balai :
- le bras formant ressort comporte, dans la continuité de la première partie plane, une première portion de renvoi courbe qui se prolonge par une paroi intermédiaire recouvrant partiellement ladite première partie plane, ladite paroi intermédiaire présentant à son extrémité opposée une deuxième portion de renvoi courbe qui se prolonge par la paroi de fixation à la tête d'entraînement, la paroi intermédiaire étant disposée entre la première partie de l'élément de rigidification du balai et la paroi de fixation ;
- la deuxième partie de l'élément de rigidification du balai est orientée de sorte que la paroi intermédiaire et la paroi de fixation soient agencées du côté de l'élément de rigidification du balai qui est opposé à la lame d'essuyage.

Dans ces différents modes de réalisation, l'élément de rigidification du balai peut comporter à l'une de ses extrémités axiales des moyens de fixation à la tête d'entraînement. Les moyens de fixation peuvent consister en une encoche réalisée dans la paroi de fixation de la portion de raccordement.

Selon d'autres caractéristiques de l'invention :
- à une extrémité distale du balai, opposée à ladite extrémité proximale, la lame et l'élément de rigidification du balai présentent des extrémités axiales situées sensiblement en vis-à-vis, et en ce qu'un embout d'assemblage fixe la lame et le ou les éléments de rigidification à ladite extrémité distale ;
- le moyen de support est réalisé en matériau(x) plastique(s) semi-rigide(s), de préférence extrudé(s) ;
- le moyen de support comporte au moins une cavité, dans laquelle est logé l'élément de rigidification du balai, et une griffe porteuse de la lame d'essuyage, la cavité et la griffe s'étendant longitudinalement sur toute la longueur du moyen de support, avec la griffe s'étendant à l'aplomb de la cavité ;
- la cavité présente une section transversale de forme sensiblement rectangulaire, complémentaire de celle de l'élément de rigidification du balai ;
- la griffe comporte deux pattes qui sont venues de matière avec une paroi du moyen de support et dont l'extrémité libre est prolongée perpendiculairement vers l'intérieur de la griffe.
D'autres caractéristiques et avantages de l'invention apparaîtront à la lecture de la description détaillée d'un mode de réalisation qui va suivre et pour la compréhension de laquelle on se reportera aux figures annexées parmi lesquelles :
- la figure 1 est une vue de face d'un ensemble d'essuyage selon l'invention ;
- la figure 2 est une vue de côté de l'ensemble d'essuyage illustré sur la figure 1 ;
- la figure 3 est une vue en coupe, dans le plan III-III illustré sur la figure 2, d'un détail de l'ensemble d'essuyage ;
- la figure 4 est une vue en perspective éclatée des différents composants de l'ensemble d'essuyage selon le premier mode de réalisation illustré sur la figure 1 ; et
- la figure 5 est une vue en perspective éclatée de différents composants d'un ensemble d'essuyage selon un deuxième mode de réalisation de l'invention, non couvert par les revendications.

Tel qu'illustré sur les figures, l'ensemble d'essuyage selon l'invention comporte un balai d'essuyage 2 et une tête d'entraînement 4.

Dans un tel ensemble d'essuyage, le balai est mis en mouvement en regard d'une vitre du véhicule par l'intermédiaire d'un mécanisme d'entraînement dans lequel la tête d'entraînement est entraînée en rotation par un arbre d'entraînement 6 monté en sortie, par exemple, d'un moteur électrique non représenté.

L'ensemble d'essuyage est avantageusement destiné à être positionné sur le véhicule de façon à ce que le balai d'essuyage, au repos, soit en position sensiblement horizontale, par exemple, le long d'un bord inférieur de la vitre. En fonctionnement, il pivote alors selon un mouvement de va-et-vient entre sa position de repos et une position angulairement décalée de ladite position de repos de façon à essuyer la zone souhaitée.

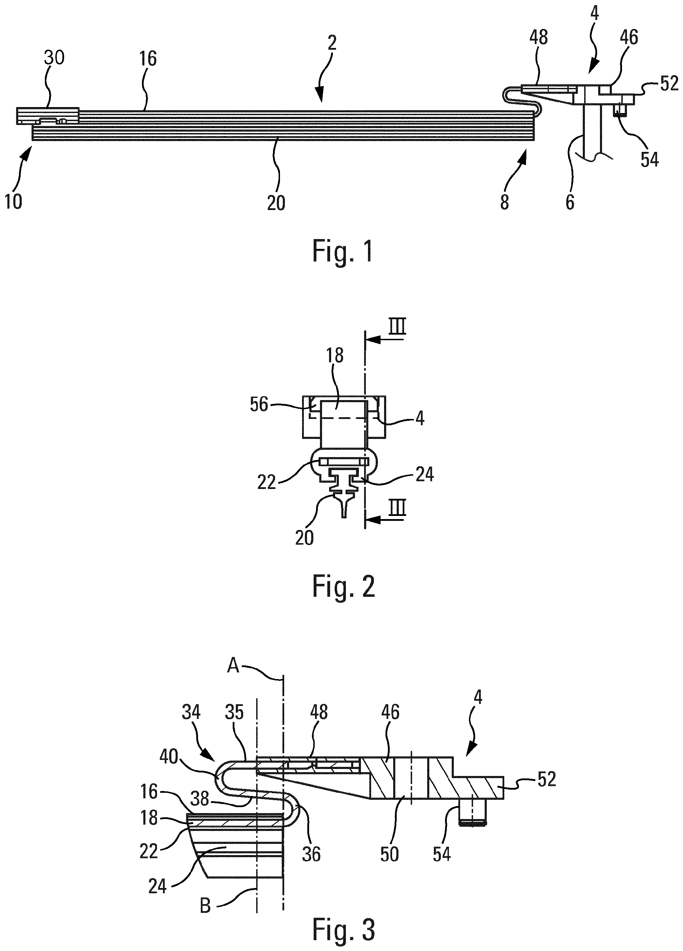

Le balai 2 présente une extrémité proximale 8 reliée à la tête d'entraînement 4 et une extrémité distale libre 10, tel que cela est visible sur la figure 1.

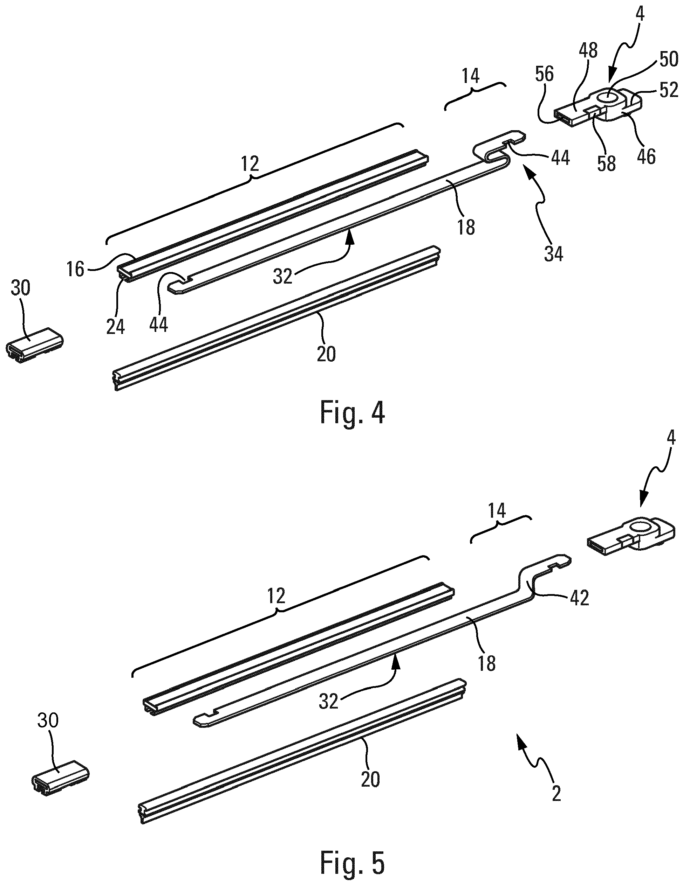

Le balai comporte une portion d'essuyage 12 et une portion de raccordement 14 à la tête d'entraînement 4, cette fois visibles sur la figure 4, ladite portion de raccordement étant disposée dans le prolongement d'une extrémité axiale de la portion d'essuyage.

La portion d'essuyage 12 comporte un moyen de support longitudinal 16, un élément de rigidification 18 et une lame d'essuyage 20.

Le moyen de support 16 comporte, conformément à la technologie balai plat, d'une part au moins une cavité 22 dans laquelle est logé l'élément de rigidification 18 du balai et, d'autre part, une griffe 24 portant la lame d'essuyage 20.

La cavité et la griffe s'étendent longitudinalement sur toute la longueur du moyen de support, et la griffe 24 s'étend à l'aplomb A de la cavité 22, en saillie d'une des parois délimitant les contours de la cavité, que l'on nommera par la suite paroi intérieure par rapport à la position du balai lorsqu'il est appliqué contre la vitre à essuyer.

La cavité 22 présente une section transversale de forme complémentaire de celle de l'élément de rigidification 18 du balai de manière à ce que celle-ci puisse être insérée dans la cavité, et ce sur toute la longueur du moyen de support 16.

La griffe 24 comporte deux pattes qui sont venues de matière avec la paroi intérieure du moyen de support de manière à s'étendre en saillie sensiblement perpendiculaire à cette paroi et dont l'extrémité libre est prolongée perpendiculairement vers l'intérieur de la griffe de manière à limiter la section de passage de la griffe et permettre l'emprisonnement de la lame d'essuyage à l'intérieur de la griffe.

Le moyen de support 16 est réalisé en matériau(x) plastique(s) semi-rigide(s), de préférence extrudé(s), tandis que l'élément de rigidification 18 du balai amené à être logé dans la cavité du moyen de support est métallique et que la lame d'essuyage 20 amenée à être retenue par la griffe est en élastomère.

La lame d'essuyage 20 présente une forme longitudinale continue telle qu'en section transversale une partie de plus grande épaisseur sert de base à une aile allant en s'affinant vers son extrémité libre. La partie de base présente une forme adaptée à être logée et retenue dans la griffe et l'aile est apte à s'étendre en saillie hors de la griffe de sorte que la lame d'essuyage, lorsque le balai est monté sur le véhicule, est en appui au niveau de cette aile contre une face extérieure de la vitre du véhicule. La vitre mentionnée comme un exemple d'une vitre essuyée par le système d'essuyage selon l'invention est ici une vitre arrière, mais il va de soi que cette vitre peut être un pare-brise du véhicule et d'une manière générale tout vitrage d'un véhicule automobile dont la surface est apte à être essuyée par un système d'essuyage.

On comprend qu'une seule vertèbre est présente dans le mode de réalisation illustré, mais que deux vertèbres superposées l'une au-dessus de l'autre pourront être prévues dans une même cavité ou dans deux cavités disposées l'une sur l'autre. La ou les vertèbres forment des éléments de rigidification du balai et ils s'étendent le long de celui-ci pour supporter la lame sur toute sa longueur.

Alors qu'à l'extrémité distale 10 du balai, la lame et l'élément de rigidification du balai présentent des extrémités axiales situées sensiblement en vis-à-vis au-delà de l'extrémité du moyen de support, et qu'un embout d'assemblage 30 permet de solidariser la lame et le ou les éléments de rigidification au niveau de ces extrémités axiales, on observe que selon l'invention, à l'extrémité proximale 8 du balai, l'élément de rigidification 18 du balai se prolonge axialement au-delà de l'extrémité axiale correspondante de la lame 20, de manière à être solidarisé à la tête d'entraînement 4, comme cela va être détaillé à la suite.

L'élément de rigidification 18 du balai est une tige préformée de manière à présenter une première partie 32, sensiblement plane et de section complémentaire à celle de la cavité, ici une section rectangulaire, apte à assurer la rigidification du support et la tenue de la lame d'essuyage, et une deuxième partie qui prolonge l'extrémité axiale de la première partie de rigidification 32 et qui est agencée de manière à former la portion de raccordement 14 du balai à la tête d'entraînement.

La portion de raccordement comporte un bras 34 configuré pour intégrer un effet ressort, apte à appliquer le balai sur la vitre et une paroi de fixation 35 à la tête d'entraînement qui s'étend dans la continuité axiale du bras.

Dans un premier mode de réalisation, illustré notamment sur la figure 4, le bras intégrant une fonction ressort comporte deux portions de renvoi courbes séparées par une paroi intermédiaire, de sorte que la portion de raccordement prend ici une forme en " S ". Dans la continuité de la première partie plane 32, une première portion de renvoi 36 est réalisée par pliage sur lui-même de l'élément de rigidification du balai selon une première ligne de pliage transversale comprise dans le plan défini par l'élément de rigidification du balai. Cette première portion de renvoi présente dans le plan de coupe axial et vertical une forme de demi-cercle qui se prolonge par une paroi intermédiaire 38 qui est de la sorte orientée de manière à venir partiellement recouvrir la première partie plane de l'élément de rigidification du balai. La paroi intermédiaire présente à son extrémité opposée une deuxième portion de renvoi 40 qui est réalisée également par pliage sur lui-même de l'élément de rigidification du balai selon une deuxième ligne de pliage parallèle à la première ligne de pliage et qui se prolonge par la paroi de fixation 35 à la tête d'entraînement, agencée dans un plan sensiblement parallèle à celui défini par la première partie de l'élément de rigidification du balai. La deuxième portion courbe présente elle aussi une forme de demi-cercle orienté dans le sens de l'éloignement de l'élément de rigidification du balai, de manière à ce que la paroi intermédiaire soit disposée entre la première partie de l'élément de rigidification du balai et la paroi de fixation. Les portions courbes sont orientées en outre de sorte que la paroi intermédiaire et la paroi de fixation soient agencées du côté de l'élément de rigidification du balai qui est opposé à la lame d'essuyage. Ainsi, lorsque la lame et l'élément de rigidification du balai sont en position dans le moyen de support, la deuxième partie s'étend au-dessus du reste du balai, la paroi de fixation s'étendant en partie à l'aplomb de l'extrémité axiale proximale de la lame.

La dimension de la paroi intermédiaire et son inclinaison par rapport à la première partie de l'élément de rigidification du balai, lorsque le balai n'est pas sollicité, sont dimensionnées pour faire travailler en flexion le bras entre la lame et la tête d'entraînement, de manière à ce que ledit bras puisse imprimer un effort au balai en direction de la vitre et assurer un essuyage efficace.

On comprend qu'en fonctionnement, si le balai vient à se dégager de la vitre, la lame n'étant alors plus en contact de celle-ci, le balai tend dans le même temps à se rapprocher de la tête d'entraînement, dans une direction perpendiculaire à la vitre, sensiblement parallèle à celle de l'arbre d'entraînement. La portion de raccordement est alors comprimée dans cette direction contre la tête d'entraînement, par aplatissement des portions de renvoi courbes.

L'élasticité du matériau utilisé pour réaliser l'élément de rigidification du balai d'une part, et le pliage réalisé pour que les parois planes de cette portion de raccordement, à savoir la paroi de fixation et la paroi intermédiaire, s'étendent dans des plans transversaux parallèles à celui défini par la première partie de l'élément de rigidification du balai d'autre part, permettent alors de créer un effet ressort optimisé qui en réaction tend à ramener l'élément de rigidification du balai dans sa forme d'origine, et donc à ramener le balai en sa position initiale contre la vitre à essuyer.

Dans un deuxième mode de réalisation, illustré sur la figure 5, le bras intégrant une fonction ressort présente la forme d'une branche oblique 42 reliant dans une continuité axiale la première partie 32 de l'élément de rigidification du balai et la paroi de fixation 35 à la tête d'entraînement. Avantageusement, il présente une pente, par rapport au plan dans lequel s'étend la portion de fixation, d'angle sensiblement égal à 45°. Là encore, la branche oblique est orientée de sorte que la paroi de fixation soit agencée du côté de l'élément de rigidification du balai qui est opposé à la lame d'essuyage. Ainsi, lorsque la lame et l'élément de rigidification du balai sont en position dans le moyen de support, la deuxième partie s'étend au-dessus du reste du balai.

La dimension et l'inclinaison de cette branche oblique sont là aussi dimensionnées pour faire travailler le bras en flexion de manière à ce que ledit bras imprime un effort au balai en direction de la vitre, pour assurer un essuyage efficace.

On peut observer que la différence entre les deux modes de réalisation réside dans le fait que la forme en « S » du bras dans le premier mode de réalisation implique que l'extrémité axiale proximale du balai s'étend sous la tête d'entraînement ce qui permet, tel que cela est visible sur les figures 1 et 3, que cette extrémité de la lame puisse nettoyer une zone de la vitre habituellement non accessible par le balai d'essuyage lorsqu'il est raccordé à une de ses extrémités à une tête d'entraînement sur l'arbre d'entraînement.

Dans les deux modes de réalisation, les extrémités libres de l'élément de rigidification du balai sont chanfreinées pour faciliter l'insertion de l'élément de rigidification du balai dans la cavité du support à une extrémité et l'insertion dans la tête d'entraînement à l'autre extrémité. Par ailleurs, à chaque extrémité axiale, on prévoit une encoche transversale 44 réalisée dans un des bords longitudinaux de l'élément de rigidification du balai, pour permettre l'encliquetage de l'élément de rigidification du balai dans des moyens correspondants.

A l'extrémité distale du balai, l'embout 30 disposé à l'extrémité distale du balai coopère avec l'encoche transversale 44 réalisée à l'extrémité axiale correspondante de l'élément de rigidification du balai si celle-ci dépasse du moyen de support tel que cela a été décrit ci-dessus. On comprendra que dans une variante non représentée, les extrémités de l'élément de rigidification du balai et de la lame d'essuyage peuvent être affleurantes avec l'extrémité du moyen de support et l'embout être seulement emmanché autour du support sans coopération directe avec le ou les éléments de rigidification de la lame. C'est alors dans la cavité du moyen de support qu'on prévoit des moyens aptes à coopérer avec l'encoche transversale de l'élément de rigidification du balai.

A l'extrémité proximale du balai, et ce dans les deux modes de réalisation décrits ci-dessus, l'extrémité libre de la paroi de raccordement coopère avec la tête d'entraînement 4, qui comporte un corps axial 46 et un bras latéral 48 prolongeant radialement le corps axial.

Le corps axial présente un alésage 50, ici transversal, pour recevoir une extrémité de l'arbre d'entraînement 6 disposé en sortie du moteur d'entraînement du balai d'essuie-glace. Des moyens sont prévus pour la solidarisation de l'arbre dans l'alésage du corps axial, ces moyens pouvant être indifféremment un système à clavette, ou à cannelures, ou encore à titre d'exemple des moyens d'ajustement pour un montage à force des deux éléments.

Le corps comporte en outre une patte 52 qui prolonge radialement le corps axial. Cette patte comporte de préférence un pion de guidage 54 qui dépasse en saillie de la face intérieure de la patte pour coopérer avec un chemin de guidage formé dans un élément de structure du véhicule ici non représenté. Le fait que la patte soit diamétralement opposée au bras latéral lui permet de jouer un rôle de butée empêchant le basculement de la tête d'entraînement suite aux contraintes générées sur la tête par le bras intégrant une fonction ressort. On comprend en effet que lorsque le bras participe au plaquage de la lame contre la vitre, cette dernière génère un effort en retour sur le balai et sur l'élément de rigidification du balai, de sorte que la portion de ressort peut créer un effort poussant la tête d'entraînement dans le sens de l'éloignement de la vitre essuyée. Le couple créé est alors compensé par le contact de la patte 52 contre l'élément de structure.

Le bras latéral 48 présente un logement de réception 56 de l'extrémité longitudinale proximale de l'élément de rigidification du balai. Tel que cela est visible sur la figure 4, un clip 58 est prévu dans le logement de réception pour coopérer avec l'encoche transversale de l'extrémité de l'élément de rigidification du balai. Ce clip dépasse en saillie à l'intérieur du logement dans sa position de repos de manière à être repoussé élastiquement vers une position dégagée permettant l'insertion de l'élément de rigidification du balai et l'élasticité du clip ramène celui-ci en position initiale, en prise dans l'encoche, de sorte que l'élément de rigidification du balai ne peut se désengager.

Dans le cas ainsi décrit, où le montage de l'élément de rigidification du balai dans la tête d'entraînement est irréversible, l'utilisateur souhaitant remplacer le balai d'essuyage retire l'ensemble comprenant le balai et la tête d'entraînement en désengageant cette dernière de l'arbre d'entraînement, puis il replace une nouvelle tête sur l'arbre avant de venir solidariser un nouveau balai sur la tête. On vend alors en après-vente l'ensemble d'essuyage comprenant un balai, selon l'un ou l'autre des modes de réalisation, et une tête d'entraînement.

On comprendra que le clip prévu dans le logement de réception pour coopérer avec l'encoche de l'élément de rigidification du balai pourrait être conçu pour autoriser un montage réversible de l'élément de rigidification du balai dans la tête d'entraînement, et l'utilisateur pourrait laisser à demeure la tête d'entraînement sur l'arbre d'entrainement et ne remplacer à chaque fois que le balai d'essuyage.

Dans la position assemblée illustrée sur les figures 2 à 4, dans laquelle le balai est monté sur la tête d'entraînement par encliquetage de l'extrémité longitudinale proximale de l'élément de rigidification du balai, on constate qu'une partie du balai d'essuyage s'étend sous le bras latéral de la tête d'entraînement grâce à la forme courbe de la partie de raccordement du balai.

La description qui précède explique clairement comment l'invention permet d'atteindre les objectifs qu'elle s'est fixés et notamment de proposer un ensemble d'essuyage qui permette d'obtenir une grande surface d'essuyage, par un balai correctement appliqué sur la vitre à essuyer, le tout dans une conception simple et un nombre de pièces réduit.

Tous ces avantages sont obtenus par la conception de l'extrémité proximale courbée du balai d'essuyage, notamment dans sa coopération avec une tête d'entraînement adaptée.

La forme et l'orientation de la courbe permet d'avoir une extrémité de la lame d'essuyage qui s'étend sous la tête d'entraînement et donc de couvrir une zone de la vitre qui est classiquement non nettoyée sur les vitres à l'arrière des véhicules.

Par ailleurs, cette forme permet d'assurer un effet élastique tendant à ramener le balai dans sa position d'origine, plaqué contre la vitre à essuyer, avec une pression appliquée sensiblement verticalement, de haut en bas, qui assure un bon plaquage du balai.

Bien entendu, diverses modifications peuvent être apportées par l'homme du métier aux structures de l'ensemble d'essuyage, qui viennent d'être décrites à titre d'exemples non limitatifs, dès lors que l'on reprend le principe de la conception décrite ci-dessus avec une pièce de forme simple qui intègre la fonction de ressort de plaquage du bras de connexion à la tête d'entraînement venu de matière avec l'élément de rigidification du balai du balai. La forme ici décrite en S pourra ainsi varier dès lors qu'elle assure les deux fonctions que sont le balayage sous la tête d'entraînement et le plaquage correct du balai contre la vitre à essuyer.

En variante non représentée, on pourra prévoir qu'un accessoire est fixé sur le support longitudinal, et cet accessoire, pourra être avantageusement un déflecteur aérodynamique comprenant un dispositif de distribution et de projection de fluide constitué de deux canaux longitudinaux percés de trous afin de permettre la projection d'un liquide de lavage par exemple sur une vitre du véhicule. On prévoit dans ce cas la présence sur le support d'une nervure longitudinale destinée à être insérée dans un logement de forme complémentaire. Cette nervure permet, au besoin, de rigidifier le déflecteur aérodynamique, réalisé par extrusion indépendamment du support, après assemblage sur le support.

## Revendications

1. Balai d'essuyage (2) d'une vitre de véhicule automobile, comprenant une portion d'essuyage (12) et une portion de raccordement (14) à un mécanisme d'entraînement (4, 6) du balai, ladite portion d'essuyage comprenant un moyen de support (16) sur lequel est rapportée une lame d'essuyage (20) de la vitre et à l'intérieur duquel est logé un élément (18) de rigidification du balai, la portion de raccordement (14) étant disposée dans le prolongement d'une extrémité axiale proximale (8) de la portion d'essuyage, ledit élément de rigidification (18) étant une tige préformée de manière à présenter une première partie (32) sensiblement plane, apte à être logée dans le moyen de support (16) dans la portion d'essuyage (12) du balai, et une deuxième partie qui prolonge l'extrémité axiale de la première partie et qui forme ladite portion de raccordement (14) du balai audit mécanisme d'entraînement, la deuxième partie de l'élément de rigidification du balai (18) comportant un bras formant ressort (34) et une paroi de fixation (35) qui s'étend sensiblement parallèlement à la portion d'essuyage (12) du balai, ledit balai d'essuyage (2) étant **caractérisé en ce que** le bras formant ressort (34) comprend l'élément de rigidification du balai (18) replié sur lui-même de sorte que la deuxième partie de l'élément de rigidification du balai (18) présente une forme en " S ".

2. Balai selon la revendication 1, **caractérisé en ce que** le bras formant ressort (34) comporte, dans la continuité de la première partie plane (32), une première portion de renvoi courbe (36) qui se prolonge par une paroi intermédiaire (38) recouvrant partiellement ladite première partie plane, ladite paroi intermédiaire (38) présentant à son extrémité opposée une deuxième portion de renvoi courbe (40) qui se prolonge par ladite paroi de fixation (35), la paroi intermédiaire étant disposée entre la première partie de l'élément de rigidification du balai et la paroi de fixation.

3. Balai d'essuyage selon la revendication 2, **caractérisé en ce que** la deuxième partie de l'élément de rigidification du balai est orientée de sorte que la paroi intermédiaire (38) et la paroi de fixation (35) soient agencées du côté de l'élément de rigidification du balai (18) qui est opposé à la lame d'essuyage (20).

4. Balai d'essuyage selon l'une des revendications précédentes, **caractérisé en ce que** l'élément de rigidification du balai (18) comporte à l'une de ses extrémités axiales des moyens de fixation au mécanisme d'entraînement (4, 6).

5. Balai d'essuyage selon la revendication précédente, **caractérisé en ce que** les moyens de fixation consistent en une encoche (44) réalisée dans la paroi de fixation (35).

6. Balai d'essuyage selon l'une des revendications précédentes, **caractérisé en ce qu'**à une extrémité distale (10) du balai, opposée à ladite extrémité proximale (8), la lame (20) et l'élément de rigidification du balai (18) présentent des extrémités axiales situées sensiblement en vis-à-vis, et **en ce qu'**un embout d'assemblage (30) fixe la lame et le ou les éléments de rigidification à ladite extrémité distale.

7. Balai d'essuyage selon l'une des revendications précédentes, **caractérisé en ce que** le moyen de support (16) est réalisé en matériau(x) plastique(s) semi-rigide(s), de préférence extrudé(s).

8. Balai d'essuyage selon l'une des revendications précédentes, **caractérisé en ce que** le moyen de support (16) comporte au moins une cavité (22), dans laquelle est logée l'élément de rigidification du balai (18), et une griffe (24) porteuse de la lame d'essuyage (20), la cavité et la griffe s'étendant longitudinalement sur toute la longueur du moyen de support, avec la griffe s'étendant à l'aplomb (A) de la cavité.

9. Balai d'essuyage selon la revendication précédente, **caractérisé en ce que** la cavité (22) présente une section transversale de forme sensiblement rectangulaire, complémentaire de celle de l'élément de rigidification du balai (18).

10. Balai d'essuyage selon la revendication 8 ou 9, **caractérisé en ce que** la griffe (24) comporte deux pattes qui sont venues de matière avec une paroi du moyen de support (16) et dont l'extrémité libre est prolongée perpendiculairement vers l'intérieur de la griffe.

## Patentansprüche

1. Scheibenwischer (2) einer Kraftfahrzeugscheibe, umfassend einen Wischabschnitt (12) und einen Anschlussabschnitt (14) an einen Antriebsmechanismus (4, 6) des Scheibenwischers, wobei der Wischabschnitt ein Tragmittel (16) umfasst, auf das ein Wischerblatt (20) der Scheibe aufgesetzt ist, und in dem ein Versteifungselement (18) des Scheibenwischers angeordnet ist, wobei der Anschlussabschnitt (14) in der Verlängerung eines proximalen axialen Endes (8) des Wischabschnitts angeordnet ist, wobei das Versteifungselement (18) eine vorgeformte Stange ist, so dass sie einen ersten im Wesentlichen flachen Teil (32), der geeignet ist, in dem Tragmittel (16) in dem Wischabschnitt (12) des Scheibenwischers angeordnet zu sein, und einen zweiten Teil aufweist, der das axiale Ende des ersten Teils verlängert und den Anschlussabschnitt (14) des Scheibenwischers an den Antriebsmechanismus bildet, wobei der zweite Teil des Versteifungselements (18) des Scheibenwischers einen eine Feder bildenden Arm (34) und eine Befestigungswand (35) umfasst, die sich im Wesentlichen parallel zum Wischabschnitt (12) des Scheibenwischers erstreckt, wobei der Scheibenwischer (2) **dadurch gekennzeichnet ist, dass** der eine Feder bildende Arm (34) das Versteifungselement (18) des Scheibenwischers umfasst, das auf sich selbst umgelegt ist, so dass der zweite Teil des Versteifungselements (18) des Scheibenwischers eine "S"-Form aufweist.

2. Scheibenwischer nach Anspruch 1, **dadurch gekennzeichnet, dass** der eine Feder bildende Arm (34) in der Kontinuität des ersten flachen Teils (32) einen ersten gekrümmten Rückführungsabschnitt (36) umfasst, der sich durch eine Zwischenwand (38) verlängert, die teilweise den ersten flachen Teil bedeckt, wobei die Zwischenwand (38) an ihrem gegenüberliegenden Ende einen zweiten gekrümmten Rückführungsabschnitt (40) aufweist, der sich durch die Befestigungswand (35) verlängert, wobei die Zwischenwand zwischen dem ersten Teil des Versteifungselements des Scheibenwischers und der Befestigungswand angeordnet ist.

3. Scheibenwischer nach Anspruch 2, **dadurch gekennzeichnet, dass** der zweite Teil des Versteifungselements des Scheibenwischers derart ausgerichtet ist, dass die Zwischenwand (38) und die Befestigungswand (35) auf der Seite des Versteifungselements des Scheibenwischers (18) angeordnet sind, die dem Wischerblatt (20) gegenüberliegt.

4. Scheibenwischer nach einem der vorhergehenden Ansprüche, **dadurch gekennzeichnet, dass** das Versteifungselement (18) des Scheibenwischers an einem seiner axialen Enden Mittel zur Befestigung am Antriebsmechanismus (4, 6) umfasst.

5. Scheibenwischer nach dem vorhergehenden Anspruch, **dadurch gekennzeichnet, dass** die Befestigungsmittel in einer Kerbe (44) bestehen, die in der Befestigungswand (35) ausgeführt ist.

6. Scheibenwischer nach einem der vorhergehenden Ansprüche, **dadurch gekennzeichnet, dass** an einem distalen Ende (10) des Scheibenwischers, das dem proximalen Ende (8) gegenüberliegt, das Wischerblatt (20) und das Versteifungselement (18) des Scheibenwischers axiale Enden aufweisen, die einander im Wesentlichen gegenüberliegen, und dass ein Montageansatz (30) das Wischerblatt und das oder die Versteifungselemente an dem distalen Ende befestigt.

7. Scheibenwischer nach einem der vorhergehenden Ansprüche, **dadurch gekennzeichnet, dass** das Tragmittel (16) aus vorzugsweise extrudiertem(n) halbstarrem(n) Kunststoff(en) hergestellt ist.

8. Scheibenwischer nach einem der vorhergehenden Ansprüche, **dadurch gekennzeichnet, dass** das Tragmittel (16) mindestens einen Hohlraum (22), in dem das Versteifungselement (18) des Scheibenwischers angeordnet ist, und einen Traggreifer (24) des Wischerblattes (20) umfasst, wobei sich der Hohlraum und der Greifer längs über die gesamte Länge des Tragmittels erstrecken, wobei sich der Greifer senkrecht (A) zum Hohlraum erstreckt.

9. Scheibenwischer nach dem vorhergehenden Anspruch, **dadurch gekennzeichnet, dass** der Hohlraum (22) einen im Wesentlichen rechteckigen Querschnitt aufweist, der zu jenem des Versteifungselements (18) des Scheibenwischers komplementär ist.

10. Scheibenwischer nach Anspruch 8 oder 9, **dadurch gekennzeichnet, dass** der Greifer (24) zwei Klauen umfasst, die mit einer Wand des Tragmittels (16) aus einem Stück sind und deren freies Ende senkrecht zum Inneren des Greifers verlängert ist.

## Claims

1. Wiper (2) of a window of a motor vehicle, comprising a wiper portion (12) and a connection portion (14) to a drive mechanism (4, 6) of the wiper, said wiper portion comprising a supporting element (16) that is attached to a wiper blade (20) of the window and that contains a stiffening element (18) of the wiper, the connection portion (14) being arranged as an extension of a proximal axial extremity (8) of the wiper portion, said stiffening element (18) being a rod preformed to have a substantially flat first portion (32) that can be seated in the supporting element (16) in the wiper portion (12) of the wiper, and a second portion that extends the axial extremity of the first portion and that forms said connection portion (14) between said wiper and said drive mechanism, the second portion of the stiffening element of the wiper (18) having a spring arm (34) and an attachment wall (35) that extends substantially parallel to the wiper portion (12) of the wiper, said wiper (2) being **characterised in that** the spring arm (34) has the stiffening element of the wiper (18), folded about itself such that the second portion of the stiffening element of the wiper (18) is "S" shaped.

2. Wiper according to Claim 1, **characterised in that** the spring arm (34) includes, after the flat first portion (32), a first curved return portion (36) that is extended by an intermediate wall (38) partially overlapping said flat first portion, the opposite extremity of said intermediate wall (38) having a second curved return portion (40) that is extended by said attachment wall (35), the intermediate wall being arranged between the first portion of the stiffening element of the wiper and the attachment wall.

3. Wiper according to Claim 2, **characterised in that** the second portion of the stiffening element of the wiper is oriented such that the intermediate wall (38) and the attachment wall (35) are arranged on the side of the stiffening element of the wiper (18) that is opposite the wiper blade (20).

4. Wiper according to any one of the preceding claims, **characterised in that** the stiffening element of the wiper (18) includes, at one of the axial extremities of same, attachment means to the drive mechanism (4, 6).

5. Wiper according to the preceding claim, **characterised in that** the attachment means include a notch (44) formed in the attachment wall (35).

6. Wiper according to one of the preceding claims, **characterised in that**, at a distal extremity (10) of the wiper opposite said proximal extremity (8), the blade (20) and the stiffening element of the wiper (18) have axial extremities positioned substantially facing one another, and **in that** an assembly fitting (30) attaches the blade and the stiffening element or elements to said distal extremity.

7. Wiper according to one of the preceding claims, **characterised in that** the supporting element (16) is made of semi-rigid plastic(s), preferably extruded plastic(s).

8. Wiper according to one of the preceding claims, **characterised in that** the supporting element (16) includes at least one cavity (22), containing the stiffening element of the wiper (18), and a claw (24) holding the wiper blade (20), the cavity and the claw extending longitudinally along the entire length of the supporting element, with the claw extending in line (A) with the cavity.

9. Wiper according to the preceding claim, **characterised in that** the cavity (22) has a substantially rectangular cross section that fits the cross section of the stiffening element of the wiper (18).

10. Wiper according to Claim 8 or 9, **characterised in that** the claw (24) comprises two legs that are formed from a wall of the supporting element (16) and whose free extremities extend perpendicular towards the inside of the claw.
